# EUROPÄISCHE PATENTSCHRIFT

(11) **EP 1 519 845 B1**
(45) Veröffentlichungstag und Bekanntmachung des Hinweises auf die Patenterteilung: **24.01.2007**
(21) Anmeldenummer: 03762462.4
(22) Anmeldetag: 09.07.2003
(51) Int. Cl.: B60G 21/055

(54) **PENDELSTÜTZE MIT INTEGRIERTEM KUGELGELENK**
ARTICULATED SUPPORT WITH INTEGRATED BALLJOINT
SUPPORT OSCILLANT A JOINT A ROTULE INTEGRE

(30) Priorität: 09.07.2002 DE 10231014
(43) Veröffentlichungstag der Anmeldung: 06.04.2005
(73) Patentinhaber: ZF Lemförder Metallwaren AG, 49448 Lemförde (DE)
(72) Erfinder: BUDDE, Frank, 49401 Damme (DE); WOLF, Georg, 49080 Osnabrück (DE)
(86) Internationale Anmeldenummer: PCT/DE2003/002294
(87) Internationale Veröffentlichungsnummer: WO 2004/005055

(56) Entgegenhaltungen:
- EP-A- 0 832 769
- EP-A- 1 217 233
- DE-A- 19 940 364
- DE-C- 575 296
- DE-U- 7 528 196
- FR-A- 2 815 387
- US-A- 5 352 059
- US-A- 5 855 447
- US-A- 6 007 079
- US-B1- 6 254 114

## Beschreibung

Die vorliegende Erfindung betrifft eine Pendelstütze gemäß den Merkmalen des Oberbegriffs des Anspruchs 1.

Pendelstützen dienen im Kraftfahrzeugbereich der Verbindung von Stabilisator und Drehlager bzw. der Achse eines Kraftfahrzeugs. Pendelstützen zeichnen sich i.d.R. durch hohe dynamische Belastbarkeit bei gleichzeitiger Korrosionsfestigkeit aus. Pendelstützen aus dem PKW-Bereich werden heutzutage aus Metall oder Kunststoff gefertigt. Pendelstützen aus Kunststoff weisen vorteilhaft ein geringes Gewicht auf. Ein Problem ergibt sich jedoch bei spritzgegossenen Pendelstützen aus den Knickraftanforderungen.

Pendelstützen gibt es in unterschiedlichen Ausführungsformen. Um die Beweglichkeit der Bauteile zueinander zu garantieren, weisen die Pendelstützen z.B. ein- oder beidseitig Kugelbolzen bzw. Kugelgelenke auf. Für eine gute Funktionsweise dieser Gelenke müssen die Einzelkomponenten wie Kugelschale und Kugelzapfen sehr genau gearbeitet sein. Zudem ist ein Dichtungssystem in Form z.B. eines Dichtungsbalgs notwendig, um die im Allgemeinen geschmierten Kugelgelenke vor Schmutz und Korrosion zu schützen.

Nachteilig bei den bekannten Pendelstützen ist, dass diese aus unverhältnismäßig vielen Teilen bestehen, wodurch der Fertigungs- und Montageaufwand unverhältnismäßig hoch ist.

Darüber hinaus ist aus der EP 1 217 233 A1 eine Pendelstütze mit einem hohlen Grundkörper bekannt, deren die Lagerstellen bildenden Bereiche zusammengedrückt sind, derart, dass sich die Innenwandungen des Hohlkörpers berühren. Die die Lagerstellen bildenden Bereiche weisen einen Durchbruch auf, in den eine separate Lagerschale eingesetzt ist. Zusätzlich wird zur Fixierung der Lagerschale ein separat zu fertigendes oder zu umspritzendes Kunststoffgehäuse vorgesehen. Eine derartige Pendelstütze ist auf Grund der zahlreichen Arbeitsschritte somit nur mit erhöhtem Aufwand und Kosten zu fertigen.

Aufgabe der vorliegenden Erfindung ist es, eine Pendelstütze bereitzustellen, die einfach in ihrem Aufbau ist, aus wenigen Teilen besteht und sich somit leicht montieren lässt.

Diese Aufgabe wird erfindungsgemäß durch eine Pendelstütze mit den Merkmalen des Anspruchs 1 gelöst. Vorteilhafte Weiterbildungen der Pendelstütze ergeben sich durch die Merkmale der Unteransprüche.

Der der Erfindung zugrunde liegende Gedanke besteht darin, dass die Pendelstütze aus einem im wesentlichen länglichen Grundkörper besteht, der zumindest eine Lagerschale für ein Kugelgelenk aufweist. Dabei kann die Lagerschale selbst durch die Außenwandung des Grundkörpers gebildet sein, wobei die Außenwandung in diesem Fall eine entsprechende Ausnehmung aufweist, welche vorteilhaft kugelförmiger Gestalt ist.

In einer anderen Ausführungsform kann der Grundkörper eine Ausnehmung aufweisen, in die eine Lagerschale für ein Kugelgelenk einsetzbar ist. Die Lagerschale kann dabei mit dem Grundkörper in beliebiger Weise verbunden werden. Vorteilhaft wird die Lagerschale mit dem Grundkörper mittels einer Verrastung, Verklebung oder Verschweißung mit diesem verbunden.

Der Grundkörper kann dabei vorteilhaft ein Spritzgussteil oder ein Strangpressprofil sein. Zur Erzielung einer höheren Steifigkeit kann der Bereich des Grundkörpers, der die Lagerschale trägt bzw. bildet, verstärkt ausgebildet sein, da dieser Bereich bzw. Abschnitt erhöhten mechanischen Belastungen unterliegt. Die Verstärkung kann z. B. durch eine Faserverstärkung oder zusätzliche andere Materialkomponenten erfolgen. Gleichsam sind eventuell auch zusätzliche Stege oder dergleichen zur Erhöhung der Steifigkeit vorzusehen.

Sofern der Grundkörper aus einem im wesentlichen rohrförmigen Profil besteht, kann z. B. ein oder beide Enden des Rohres zusammengedrückt werden, so dass die Endbereiche einen kleineren Durchmesser aufweisen als das Mittelstück des Grundkörpers. Es ist ebenfalls denkbar, dass die Endbereiche vom Durchmesser her nicht verändert werden und dagegen der Mittelbereich des Grundkörpers z. B. mittels des Hohlkörperblasverfahrens aufgeweitet wird. Auch hierdurch kann die Steifigkeit des Grundkörpers vorteilhaft erhöht werden.

Je nach Anforderung kann vorteilhaft zumindest ein Endbereich des Grundkörpers eine Lagerschale eines Kugelgelenks bilden. Sofern die Pendelstütze mittels beidseitig angelagerter Kugelgelenke montiert werden muss, weisen vorteilhaft beide freien Endbereiche des Grundkörpers entsprechende Lagerschalen auf

Damit das Kugelgelenk gegen Verschmutzung und äußere mechanische Einflüsse geschützt ist, ist vorteilhaft ein Dichtungsbalg vorzusehen, der an dem Grundkörper oder einer eingesetzten Lagerschale befestigbar ist. Dieser kann durch Spannung am Grundkörper bzw. der Lagerschale gehalten sein. Es ist jedoch auch möglich, einen zusätzlichen Spannring zur Befestigung des Dichtungsbalgs vorzusehen.

Es ist ebenfalls Gegenstand der vorliegenden Erfindung, dass an einem freien Ende des Grundkörpers ein Befestigungselement angeordnet werden kann, über das weitere Fahrzeugbauteile oder Gelenke angebracht werden können. So kann dieses Befestigungselement z. B. mittels einer Verrastung am Grundkörper befestigt werden. Hierzu weist der Grundkörper vorteilhaft Rücksprünge an seiner Innen- oder Außenwandung auf, die mit entsprechenden Vorsprüngen zusammenwirken und eine Rastverbindung bewirken.

Nachfolgend werden verschiedene Ausführungsformen des Erfindungsgedankens anhand von Zeichnungen näher erläutert. Es zeigen:
- Figur 1:: Eine Querschnittsdarstellung durch eine erste Ausführungsform einer erfindungsgemäßen Pendelstütze;
- Figur 1a:: Schnittdarstellung A-A gem. Fig. 1;
- Figur 2:: Querschnittsdarstellung durch eine zweite mögliche Ausführungsform einer erfindungsgemäßen Pendelstütze;
- Figur 3:: Querschnittsdarstellung durch eine dritte mögliche Ausführungsform einer erfindungsgemäßen Pendelstütze; sowie
- Figur 4:: Querschnittsdarstellung durch eine vierte mögliche Ausführungsform einer erfindungsgemäßen Pendelstütze.

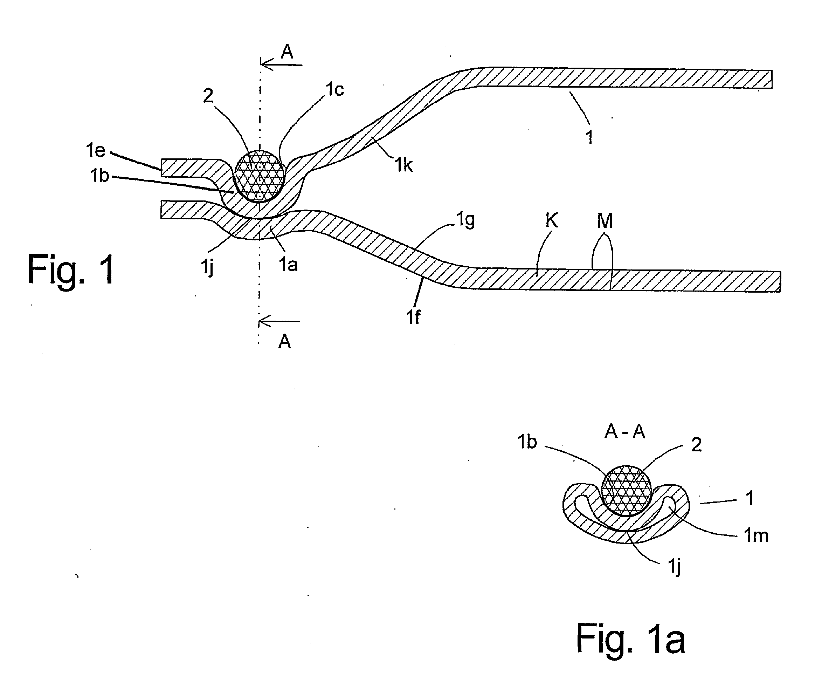

Die Figur 1 zeigt eine Querschnittsdarstellung durch einen Endbereich einer Pendelstütze bestehend aus einem Grundkörper 1 sowie dessen freien Ende 1 a, welches die Lagerschale 1b für eine Kugel 2 eines Kugelgelenks bildet. Der Grundkörper 1 ist ein insbesondere aus dem Material Kunststoff gefertigtes längliches Teil und kann vom Querschnitt her beliebige Formen aufweisen. Der in Fig. 1 und Fig. 1a beispielhaft dargestellte Grundkörper ist vom Querschnitt her im wesentlichen hohl und rund, wobei wenigstens ein Ende des Grundkörpers 1 im Durchmesser kleiner ist als der mittlere Bereich des Grundkörpers. Das Durchmesserverhältnis kann jedoch beliebiger Art sein, so ist auch ein gleichbleibend großer Durchmesser über die ganze Länge der Pendelstütze möglich. Die Wandungen des Grundkörpers 1 sind im Bereich 1a derart ausgeformt, dass zum einen eine Lagerschale 1b ausgeformt ist und zum anderen die gegenüber liegende Wandung derart geformt ist, dass sie mit ihrer Innenwandung 1g gegen die Innenwandung 1g des die Lagerschale 1b bildenden Bereichs anstößt und somit die Festigkeit und Stabilität des Grundkörpers 1 positiv beeinflusst. Der an der Gelenkkugel 2 angeformte Kugelzapfen ist nicht dargestellt. Ausgehend vom mittleren Bereich verjüngt sich der Grundkörper 1 im Bereich 1k hin zum Abschnitt 1a. Die Stirnseite 1e des Grundkörpers 1 kann z. B. mittels eines nicht dargestellten Stopfens abdichtend verschlossen oder aber mittels eines Werkzeugs z.B. durch abquetschen verschlossen werden. Wie aus der Figur 1a ersichtlich, liegen die Innenwandungen 1 g des Grundkörpers 1 im Bereich 1j bzw. der Schnittebene A-A aneinander an, wodurch der Innenraum 1m im Bereich der Lagerschale 1b fast vollständig geschlossen ist. Die Ausformung 1b ist kugelschalenförmig, so dass die Gelenkkugel 2 über einen großen Bereich an der Außenwandung 1f des Grundkörpers 1 anliegt.

Um gute tribologische Eigenschaften zu gewährleisten, besteht der Grundkörper selbst aus einer Kernkomponente K und einer die Mantelfläche M bildenden Komponente. Der Grundkörper kann sowohl ein Spritzgussteil als auch ein mittels des Hohlkörperblasverfahrens hergestelltes Teil sein. Sofern kein Kunststoff verwendet wird, ist es ebenfalls möglich, dass der Grundkörper aus einem Metall besteht, wobei insbesondere im Bereich der Ausformung 1b als Lagerschale ein Gleit- bzw. Schmiermittel eingesetzt wird. Es ist ferner möglich, dass der aus Kunststoff gefertigte Grundkörper 1 mittels einer Metalleinlage, z.B. einem Metallrohr, welches insbesondere vollständig vom Kunststoff umschlossen ist, verstärkt ist.

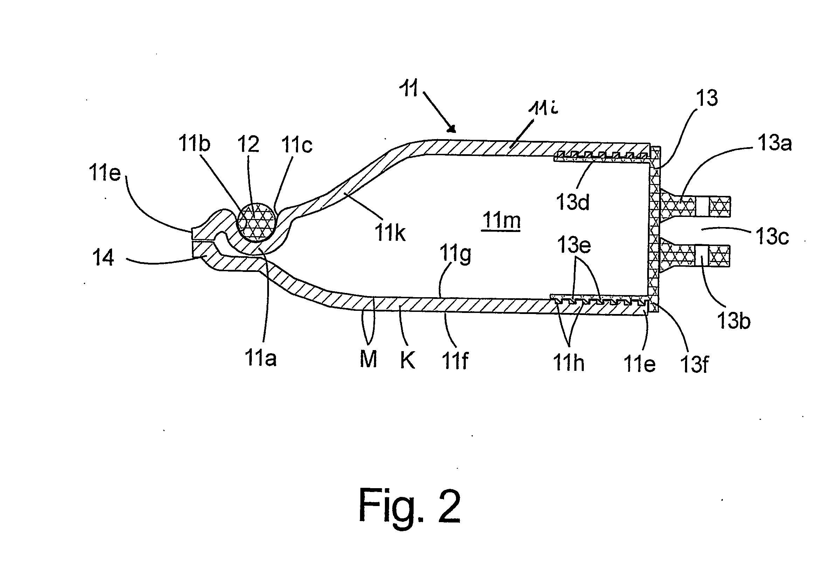

Die Figur 2 zeigt eine zweite mögliche Ausführungsform einer Pendelstütze in Querschnittsdarstellung. Der Grundkörper 11 ist zumindest im mittleren Bereich 11i vom Querschnitt her kreisförmig. Es ist jedoch prinzipiell jede beliebige Querschnittsform für den Grundkörper 11 wählbar, was selbstverständlich für alle anderen beispielhaft dargestellten und erläuterten Ausführungsformen ebenso gilt. Der Grundkörper 11 ist ein hohles Bauteil, dessen Hohlraum 11m an den Stirnseiten 11 e offen ist. Am rechten Ende des Grundkörpers 11 ist ein Befestigungselement 13 mittels einer Verrastung 13e befestigt, wobei die Verrastungen bzw. Vorsprünge 13e an einem in den Hohlraum 11m des Grundkörpers 11 eingreifenden Vorsprung 13d angeordnet sind und in Rücksprünge bzw. umlaufende Nuten 11h eingreifen. Mit seiner kragenförmigen Wandung 13f liegt das Befestigungselement 13 insbesondere abdichtend an der Stirnseite 11e des Grundkörpers 11 an. An der dem Vorsprung 13d abgewandten Seite des Kragens 13f sind am Befestigungselement 13 Haltevorrichtungen 13a angeordnet bzw. angeformt, welche fensterartige Öffnungen 13b aufweisen und zueinander beabstandet angeordnet sind und einen Zwischenraum 13c bilden, welcher zur Aufnahme eines Kfz-Bauteils dient. Mittels des Befestigungselements 13 und seiner Vorsprünge 13a kann die Pendelstütze z. B. an der Fahrzeugkarosserie befestigt werden.

Das andere Ende des Grundkörpers 11 ist derart geformt, dass es eine Lagerschale 11b für eine Gelenkkugel 12 bildet. Der Abschnitt 11a, welcher die Lagerschale 11b bildet, ist vom Durchmesser her kleiner als der mittlere Bereich 11i des Grundkörpers 11. Die Öffnung des Hohlraums 11m im Bereich 11 a ist mittels eines Werkzeugs abdichtend zusammengequetscht.

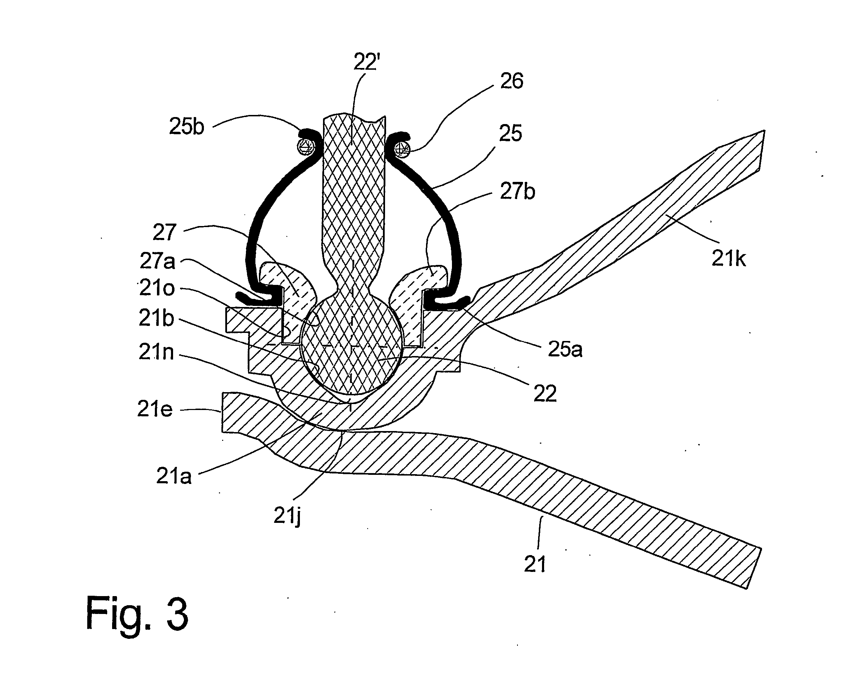

Die Figur 3 zeigt eine dritte mögliche Ausführungsform einer erfindungsgemäßen Pendelstütze. Ausschnittsweise ist nur der die Lagerschale bildende Endbereich 21 a des Grundkörpers 21 mit eingesetzten Kugelzapfen 22' und daran angeformter Gelenkkugel 22 dargestellt. Der Grundkörper 21 verjüngt sich im Bereich 21k hin zum Bereich 21 a. Die eine Seite der Wandung des Grundkörpers 21 ist an seiner Außenseite kugelschalenförmig ausgestaltet und bildet die Lagerschale 21b. Im Zentrum der Lagerschale 21b ist eine Vertiefung 21n eingeformt, welche eine Fettasche bildet, in der Fett zur Schmierung des Kugelgelenks bevorratet ist. Die Lagerschale 21b umschließt die Gelenkkugel 22 in einem Winkel von kleiner gleich 180°, so dass die Gelenkkugel 23 problemlos in die Lagerschale 21b eingesetzt werden kann. Ein zusätzliches Verschlusselement 27 wird über den Kugelzapfen 22' und die Gelenkkugel 22 in eine weitere Aussparung 21o, die sich an die Ausnehmung für die Lagerschale 21b anschließt, eingesetzt und z. B. mit der Außenwandung des Grundkörpers 21 verklebt oder verschweißt. Hierdurch ist die Gelenkkugel 22 sicher an dem Grundkörper 21 gehalten. Ein zusätzlicher Dichtungsbalg 25 wird mit seinem Ende 25a in einen umlaufenden Rücksprung des Verschlusselements 27, welcher durch einen Kragen 27b gebildet ist, eingespannt, wodurch der Dichtungsbalg 25 gegen Verlieren aufgrund seiner eigenen Spannung sicher gehalten ist. Optional kann das Ende 25a des Dichtungsbalgs auch mit einem nicht dargestellten Spannring am Grundkörper 21 bzw. dem Verschlusselement 27 gesichert werden. Das andere Ende 25b des Dichtungsbalgs 25 umgreift den Kugelzapfen 22' und wird mit einem Spannring 26 gegen diesen druckbeaufschlagt. Die Wandung des Grundkörpers 21 ist derart im Bereich 21 a zusammengedrückt bzw. derart ausgeformt, dass die Innenwandungen des Grundkörpers 21 im Bereich 21j aneinander liegen.

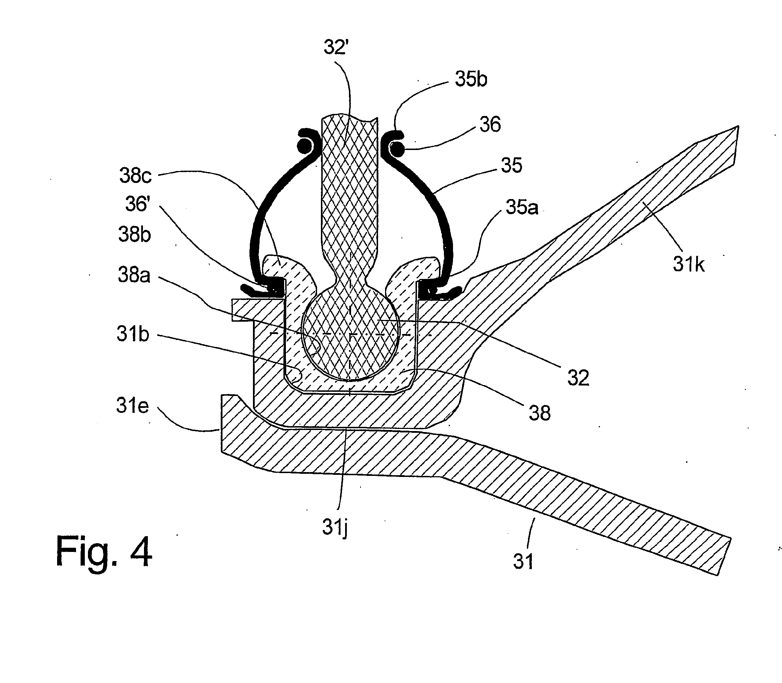

Die Figur 4 zeigt eine vierte mögliche Ausführungsform der erfindungsgemäßen Pendelstütze im Querschnitt, wobei hier der Grundkörper 31 nicht selbst die Lagerschale bildet, sondern lediglich eine topfförmige Ausnehmung 31b aufweist, in die ein Lagerschalenteil 38 eingesetzt ist. Das Lagerschalenteil 38 kann entweder in der Ausnehmung 31b verrastet werden und/oder in diese eingeklebt und/oder mit dem Grundkörper 31 verschweißt werden. Das Lagerschalenteil 38 kann aus einem insbesondere flexiblen Material gefertigt sein. Hierdurch ist es möglich, dass die Kugel 32 um mehr als 180° von dem Lagerschalenteil 38 umgriffen ist. Das Lagerschalenteil 38 weist kragenförmige Vorsprünge 38c auf, die zusammen mit der Außenwandung des Grundkörpers 31 eine ringförmige Nut bilden, in der ein Dichtungsbalg 35 mit seinem einen Ende 35a eingelegt bzw. befestigt ist. Als zusätzliche Sicherungsmaßnahme kann ein Spannring 36' dieses Ende 35a gegen ungewolltes Lösen vom Grundkörper bzw. der Lagerschale sichern. Der Dichtungsbalg liegt mit seinem anderen Ende 35b am Kugelzapfen 32' abdichtend an, wobei ein Spannring 36 für die notwendige Andruckkraft sorgt.

Die in den Figuren dargestellten Ausführungsfonnen stellen nur einige wenige mögliche Ausführungsformen dar, die vom Erfindungsgedanken Gebrauch machen. Es ist prinzipiell jede Art von Ausgestaltung des Grundkörpers, der Ausformung des Endbereichs des Grundkörpers sowie der Ausformung der Lagerschale denkbar. Auch ist die Befestigung des Dichtungsbalges sowie der Lagerschale z.B. in Fig. 4 nur beispielhaft gewählt. Die Lagerschale selbst kann beliebiger Gestalt sein, wobei deren Gestalt im wesentlichen von den Mechanischen Beanspruchungen des Kugelgelenks und der Pendelstütze abhängen.

### Bezugszeichen:

- 1, 11, 21, 31: Grundkörper
- -"- a: Lagerschale bildender Abschnitt
- -"- b: Ausformung für Lagerschale / Lagerschale
- -"- c: Randbereich der schalenförmigen
Ausformung/Lagerschale
- -"- e: freies Ende des Grundkörpers
- -"- f: Außenwandung des Grundkörpers
- -"- g: Innenwandung der Grundkörpers
- -"- h: Nut bzw. Rücksprung
- -"- i: Mittelstück des Grundkörpers
- -"- j: Anlagefläche der äußeren Umrandungen des Grundkörpers
- -"- k: verjüngender Bereich
- -"- m: Innenraum des Grundkörpers
- -"- n: Fetttasche

- 2, 12, 22, 32: Kugel eines Kugelgelenks
- 13: Befestigungselement
- 14: Zusammengequetschtes Ende
- 22', 32': Kugelzapfen
- 25, 35: Dichtungsbalg
- 25a, 35a: am Lager befestigtes freies Ende des Dichtungsbalgs
- 25b, 35b: am Kugelzapfen befestigtes freies Ende des Dichtungsbalgs
- 26, 36, 36': Spannring
- 27: Verschlusselement
- 38: Lagerschale
- K: Kern des Materials des Grundkörpers
- M: Mantelfläche des Grundkörpers

## Patentansprüche

1. Pendelstütze für ein Kraftfahrzeug, einen länglichen insbesondere hohlen Grundkörper (1,11,21,31) aufweisend, wobei der Grundkörper (1,11,21,31) gegenüberliegende Innenwandungen und zumindest einen Abschnitt (1a,11a, 21 a,31a) aufweist, der eine Lagerschale eines Kugelgelenks bildet bzw. aufweist, wobei im Bereich des die Lagerschale bildenden bzw. aufweisenden Abschnitts (1a,11a, 21a,31a) die Innenwandungen des Grundkörpers (1,11,21,31) aneinander liegen
**dadurch gekennzeichnet, dass**
die Wandungen des Grundkörpers (1,11,21,31) in dem die Lagerschale bildenden bzw. aufweisenden Abschnitt (1a,11a, 21a,31a) derart ausgeformt sind, dass zum einen die Lagerschale ausgeformt ist und zum anderen die gegenüberliegende Wandung derart geformt ist, dass sie mit der Innenwandung gegen die Innenwandung des die Lagerschale bildenden bzw. aufweisenden Bereichs anstößt.

2. Pendelstütze nach Anspruch 1, **dadurch gekennzeichnet, dass** der Abschnitt (31a) eine Ausformung (31b) zur Aufnahme einer Lagerschale (38) hat.

3. Pendelstütze nach Anspruch 2, **dadurch gekennzeichnet, dass** die Lagerschale (38) in der Ausformung (31b) mittel Presssitz gehalten ist.

4. Pendelstütze nach Anspruch 2, **dadurch gekennzeichnet, dass** die Lagerschale (38) in der Ausformung (31b) festgeklebt, gebördelt und/oder geschweißt und/oder mittels eines Sicherungsrings und/oder einer Schnappverbindung befestigt ist.

5. Pendelstütze nach Anspruch 1, **dadurch gekennzeichnet, dass** eine Ausformung (1b,11b, 21b) des Abschnitts die Lagerschale selbst bildet, wobei die Ausformung insbesondere schalenförmig ist.

6. Pendelstütze nach einem der vorhergehenden Ansprüche, **dadurch gekennzeichnet, dass** der Abschnitt (1a) ein Endbereich des Grundkörpers (1) ist.

7. Pendelstütze nach einem der vorhergehenden Ansprüche, **dadurch gekennzeichnet, dass** beide Endbereiche des Grundkörpers (1) jeweils eine Lagerschale eines Kugelgelenks bilden bzw. aufweisen.

8. Pendel stütze nach einem der vorhergehenden Ansprüche, **dadurch gekennzeichnet, dass** der Grundkörper (1,11,21,31) ein Spritzgussteil, insbesondere aus Kunststoff ist.

9. Pendelstütze nach einem der vorhergehenden Ansprüche 1 - 7, **dadurch gekennzeichnet, dass** der Grundkörper mittels des Extrusionshohlkörperblasverfahrens hergestellt ist.

10. Pendelstütze nach einem der vorhergehenden Ansprüche, **dadurch gekennzeichnet, dass** der Grundkörper (1,11,21,31) aus zwei Komponenten besteht, von denen eine Komponente den Kern (K) und die andere Komponente die Mantelfläche (M) bildet.

11. Pendelstütze nach Anspruch 10, **dadurch gekennzeichnet, dass** die den Kern (K) bildende Komponente aus einem insbesondere faserverstärktem Material ist und die Mantelkomponente aus einem weicheren Material ist.

12. Pendelstütze nach einem der vorhergehenden Ansprüche, **dadurch gekennzeichnet, dass** das Material des die Lagerschale bildenden Bereichs des Grundkörpers insbesondere durch eingebettete Fasern oder durch angeformte Rippen verstärkt ist.

13. Pendelstütze nach einem der vorhergehenden Ansprüche, **dadurch gekennzeichnet, dass** die Lagerschale die Gelenkkugel um mehr als 180° umschlingt bzw. umgreift.

14. Pendelstütze nach einem der vorhergehenden Ansprüche, **dadurch gekennzeichnet, dass** am Randbereich der schalenförmigen Ausformung Vorsprünge am Grundkörper angeformt sind, die ein Verlieren der eingepressten Gelenkkugel verhindern und/oder zur Befestigung eines Dichtungsbalgs dienen.

15. Pendelstütze nach einem der vorhergehenden Ansprüche, **dadurch gekennzeichnet, dass** ein freies Ende (11e) des Grundkörpers (11) an seiner Innen- und/oder Außenwandung (11f,11g) mindestens einen Rücksprung (11h), insbesondere umlaufende Nut hat, die zur Verrastung eines Befestigungselements (13) dient.

16. Pendelstütze nach Anspruch 15, **dadurch gekennzeichnet, dass** das Befestigungselement (13) zur Befestigung der Pendelstütze an einem Kfz-Bauteil dient.

17. Pendelstütze nach einem der vorhergehenden Ansprüche, **dadurch gekennzeichnet, dass** der die Lagerschale bildende Abschnitt des Grundkörpers gegenüber dem Mittelstück des Grundkörpers abgeflacht oder dünner ausgebildet ist.

18. Pendelstütze nach einem der vorhergehenden Ansprüche, **dadurch gekennzeichnet, dass** ein Dichtungsbalg das Kugelgelenk abdichtend umschließt, wobei der Dichtungsbalg am Grundkörper oder der Lagerschale, insbesondere mittels einer Rastverbindung, befestigt ist.

## Claims

1. Pendulum support for a motor vehicle, comprising an oblong, in particular hollow basic body (1, 11, 21, 31), wherein the basic body (1, 11, 21, 31) has opposing inner walls and at least one portion (1a, 11a, 21a, 31a) that forms and/or comprises a bearing shell of a ball joint, wherein in the region of the portion (1a, 11a, 21a, 31a) forming and/or comprising the bearing shell the inner walls of the basic body (1, 11, 21, 31) mutually abut,
**characterized in that**
the walls of the basic body (1, 11, 21, 31) in the portion (1a, 11a, 21a, 31a) forming and/or comprising the bearing shell are deformed in such a way that, on the one hand, the bearing shell is formed and, on the other hand, the opposite wall is shaped in such a way that it rests with the inner wall against the inner wall of the region forming and/or comprising the bearing shell.

2. Pendulum support according to claim 1, **characterized in that** the portion (31a) has a deformation (31b) for receiving a bearing shell (38).

3. Pendulum support according to claim 2, **characterized in that** the bearing shell (38) is held by means of an interference fit in the deformation (31b).

4. Pendulum support according to claim 2, **characterized in that** the bearing shell (38) is fastened by gluing, flanging and/or welding and/or by means of a locking ring and/or a snap connection in the deformation (31b).

5. Pendulum support according to claim 1, **characterized in that** a deformation (1b, 11b, 21b) of the portion forms the bearing shell itself, wherein the deformation is in particular shell-shaped.

6. Pendulum support according to one of the preceding claims, **characterized in that** the portion (1a) is an end region of the basic body (1).

7. Pendulum support according to one of the preceding claims, **characterized in that** both end regions of the basic body (1) form and/or comprise in each case a bearing shell of a ball joint.

8. Pendulum support according to one of the preceding claims, **characterized in that** the basic body (1, 11, 21, 31) is an injection-moulded part, in particular of plastics material.

9. Pendulum support according to one of the preceding claims 1 - 7, **characterized in that** the basic body is manufactured by means of the extrusion blow moulding technique.

10. Pendulum support according to one of the preceding claims, **characterized in that** the basic body (1, 11, 21, 31) comprises two components, of which one component forms the core (K) and the other component the surface area (M).

11. Pendulum support according to claim 10, **characterized in that** the component forming the core (K) is made of an in particular fibre-reinforced material and the surface component is made of a more flexible material.

12. Pendulum support according to one of the preceding claims, **characterized in that** the material of the region of the basic body forming the bearing shell is reinforced in particular by embedded fibres or by integrally moulded ribs.

13. Pendulum support according to one of the preceding claims, **characterized in that** the bearing shell is wrapped round and/or surrounds the joint ball over an angle greater than 180°.

14. Pendulum support according to one of the preceding claims, **characterized in that** at the edge region of the shell-shaped deformation projections are integrally moulded on the basic body and prevent loss of the press-fitted joint ball and/or are used to fasten sealing bellows.

15. Pendulum support according to one of the preceding claims, **characterized in that** a free end (11e) of the basic body (11) has at its inner and/or outer wall (11f, 11g) at least one offset (11h), in particular circumferential groove, which is used to latch a fastening element (13).

16. Pendulum support according to claim 15, **characterized in that** the fastening element (13) is used to fasten the pendulum support to a motor vehicle component.

17. Pendulum support according to one of the preceding claims, **characterized in that**, compared to the middle piece of the basic body, the portion of the basic body forming the bearing shell is flattened or of a thinner design.

18. Pendulum support according to one of the preceding claims, **characterized in that** sealing bellows sealingly surround the ball joint, wherein the sealing bellows are fastened, in particular by means of a detent connection, to the basic body or the bearing shell.

## Revendications

1. Appui oscillant pour véhicule automobile, comportant un corps de base (1, 11, 21, 31) allongé, en particulier creux, le corps de base (1, 11, 21, 31), présentant des parois intérieures opposées et au moins un segment (la, 11a, 21a, 31a) qui forme ou comporte une coquille de coussinet d'un joint sphérique, les parois intérieures du corps de base (1, 11, 21, 31) s'appliquant les unes contre les autres dans la zone du segment (la, 11a, 21a, 31a) formant ou comportant la coquille de coussinet,
**caractérisé en ce que**
les parois du corps de base (1, 11, 21, 31) sont formées, dans le segment (la, 11a, 21a, 31a) formant ou comportant la coquille de coussinet, de manière que d'une part soit formée la coquille de coussinet et que d'autre part la paroi opposée ait une forme telle qu'elle soit jointive par sa paroi intérieure avec la paroi intérieure de la zone formant ou comportant la coquille de coussinet.

2. Appui oscillant selon la revendication 1, **caractérisé en ce que** le segment (31a) présente un creux (31b) destiné à recevoir une coquille de coussinet (38).

3. Appui oscillant selon la revendication 2, **caractérisé en ce que** la coquille de coussinet (38) est maintenue dans le creux (31b) par ajustement pressé.

4. Appui oscillant selon la revendication 2, **caractérisé en ce que** la coquille de coussinet (38) est fermement collée, rebordée et/ou soudée et/ou fixée au moyen d'une bague de sûreté et/ou d'une liaison à encliquetage, dans le creux (31b).

5. Appui oscillant selon la revendication 1, **caractérisé en ce qu'**un creux (1b, 11b, 21b) du segment forme la coquille de coussinet elle-même, le creux étant réalisé en particulier en forme de coquille.

6. Appui oscillant selon l'une des revendications précédentes, **caractérisé en ce que** le segment (1a) est une zone terminale du corps de base (1).

7. Appui oscillant selon l'une des revendications précédentes, **caractérisé en ce que** les deux zones terminales du corps de base (1) forment ou comportent chacune une coquille de coussinet d'un joint sphérique.

8. Appui oscillant selon l'une des revendications précédentes, **caractérisé en ce que** le corps de base (1, 11, 21, 31) est une pièce moulée par injection, en particulier en matière plastique.

9. Appui oscillant selon l'une des revendications 1 à 7 précédentes, **caractérisé en ce que** le corps de base est réalisé par le procédé de soufflage de corps creux par extrusion.

10. Appui oscillant selon l'une des revendications précédentes, **caractérisé en ce que** le corps de base (1, 11, 21, 31) est constitué de deux composants dont un composant forme le noyau (K) et l'autre composant la surface d'enveloppe (M).

11. Appui oscillant selon la revendication 10, **caractérisé en ce que** le composant formant le noyau (K) est constitué d'un matériau en particulier renforcé par des fibres et le composant d'enveloppe est constitué d'un matériau plus mou.

12. Appui oscillant selon l'une des revendications précédentes, **caractérisé en ce que** le matériau de la zone formant la coquille de coussinet du corps de base est renforcé en particulier par des fibres intégrées ou par des nervures venues de moulage.

13. Appui oscillant selon l'une des revendications précédentes, **caractérisé en ce que** la coquille de coussinet enveloppe ou entoure le joint sphérique sur plus de 180°.

14. Appui oscillant selon l'une des revendications précédentes, **caractérisé en ce que** sur la zone de bordure du creux en forme de coquille, sur le corps de base sont formées des saillies qui empêchent une perte du joint sphérique pressé à l'intérieur et/ou servent à la fixation d'un soufflet d'étanchéité.

15. Appui oscillant selon l'une des revendications précédentes, **caractérisé en ce qu'**une extrémité libre (11e) du corps de base (11) présente sur sa paroi intérieure et/ou paroi extérieure (11f, 11g), au moins un retrait (11h), en particulier une rainure périphérique qui sert à l'accrochage d'un élément de fixation (13).

16. Appui oscillant selon la revendication 15, **caractérisé en ce que** l'élément de fixation (13) sert à la fixation de l'appui oscillant sur un composant de véhicule.

17. Appui oscillant selon l'une des revendications précédentes, **caractérisé en ce que** le segment du corps de base formant la coquille de coussinet est aplati par rapport à la pièce centrale du corps de base ou est réalisé plus mince.

18. Appui oscillant selon l'une des revendications précédentes, **caractérisé en ce qu'**un soufflet d'étanchéité enferme de manière étanche le joint sphérique, le soufflet d'étanchéité étant fixé sur le corps de base ou la coquille de coussinet, en particulier au moyen d'une liaison à accrochage.
